# EUROPÄISCHE PATENTSCHRIFT

(11) **EP 2 123 493 B1**
(45) Veröffentlichungstag und Bekanntmachung des Hinweises auf die Patenterteilung: **11.07.2012**
(21) Anmeldenummer: 09006696.0
(22) Anmeldetag: 19.05.2009
(51) Int. Cl.: B60H 1/00, B60P 3/36

(54) **Wohnmobil oder Wohnwagen mit Warmluft-Thermoboden**
Mobile home or caravan with thermal floor heated by air
Camping-car ou caravane comprenant un plancher thermique chauffé par air

(30) Priorität: 21.05.2008 DE 102008024634
(43) Veröffentlichungstag der Anmeldung: 25.11.2009
(73) Patentinhaber: Hymer AG, 88339 Bad Waldsee (DE)
(72) Erfinder: Ehl, Stefan, 88214 Ravensburg (DE)
(74) Vertreter: Otten, Herbert

(56) Entgegenhaltungen:
- DE-A1- 2 047 190
- DE-A1- 3 002 628
- DE-U1- 9 102 618
- DE-U1-202005 017 225
- US-A- 2 756 000

## Beschreibung

Die Erfindung betrifft ein Wohnmobil oder einen Wohnwagen mit Warmluft-Thermoboden nach dem Oberbegriff des Patentanspruches 1, wie in DE 2 047 190 und DE 20 2005 017 225 U1 offenbart.

Wohnwagen oder Wohnmobile mit Warmluft-Thermoböden sind an sich bekannt. Es wird hierbei beispielsweise auf den Gegenstand der DE 91 02 618 U1 und der DE 202004016775U1 verwiesen. Hierbei ist in einem Wohnfahrzeug eine Fußbodenheizung im Bereich eines Doppelbodens angeordnet ist. Oberhalb einer lastübertragenden Bodenplatte sind Isolierplatten aufgelegt, auf denen vertikale Stege aufgesetzt sind, auf denen wiederum eine Laufplatte aufgelegt ist. Die durch die Stege gebildeten Hohlräume zwischen der Laufplatte und der Bodenplatte sind von Warmluft durchströmt (DE 202004016775U1).

In der DE 91 02 618 U1 sind oberhalb des Hohlraumes in der Laufplatte schlitzartige Ausnehmungen vorhanden, die zum Ausströmen der Luft bestimmt sind. Die Warmluft strömt somit die Laufplatte von der Unterseite her an. Durch die entstehende Wärmeleitung soll sich die Laufplatte erwärmen und so einen beheizten Fußboden bilden. Nachteil dieser bekannten Ausführung ist jedoch, dass ein relativ hoher Fußbodenaufbau in Kauf genommen werden muss, weil oberhalb der Bodenplatte relativ hochbauende abstandhaltende Stege vorhanden sind. Weiterer Nachteil ist, dass die Wärmeverteilung unterhalb der Laufplatte nur ungenügend ist, denn die Laufplatte besteht bevorzugt aus einem Isoliermaterial oder einem Material mit schlechter Wärmeleitfähigkeit, so dass die Wirkung der Fußbodenheizung schlecht ist.

Mit dem Gegenstand der DE 103 44 755 A1 ist eine Fußbodenplatte mit Oberflächenschicht bekannt geworden, bei der auf einer fahrzeugseitig vorhandenen Trägerplatte eine aus einem Isoliermaterial bestehende Kunststoffplatte (z. B. Isolier-Schaumstoff) aufgebracht ist, und die einzelnen Platten so miteinander verklebt sind, dass sich in Richtung auf eine darüber liegende Gehplatte Schlitze ergeben, durch welche die Warmluft strömt.

Auch hier besteht der Nachteil, dass ein relativ hoher Aufbau auf dem fahrzeugseitig vorhandenen Fußboden in Kauf genommen werden muss und dass die Wärmeübertragung von den unterhalb der Gehplatte befindlichen Luftschlitzen auf die Gehplatte selbst ungenügend ist.

Mit dem Gegenstand der DE 20 2004 006 180 U1 ist eine Warmluftheizung für Wohnmobile und Wohnwagen bekannt geworden, bei der die Warmluft über eine sogenannte Stegdoppelplatte strömt. Hier besteht der Nachteil, dass die Stegdoppelplatte als separates Bauteil auf der vorhandenen Fußbodenplatte aufgelegt werden muss und deshalb in unerwünschter Weise den Aufbau des Fußbodens erhöht.

Zwar kann eine solche Stegdoppelplatte auch in den Fußbodenaufbau integriert werden, mit dem Ziel, die Einbauhöhe nicht zu erhöhen. Nachteil ist jedoch, dass die Kanäle in der Stegdoppelplatte gerade und parallel zueinander verlaufen, so dass es nicht möglich ist, bestimmte Bereiche des Fußbodens im Wohnmobil oder Wohnwagen zu beheizen und bestimmte andere Bereiche auszusparen.

Beispielsweise ist es wichtig, den Bereich unterhalb eines Tisches zu beheizen, wobei der Tischfuß aus Gewichtsgründen direkt auf der fahrzeugseitigen (untersten) Bodenplatte aufsitzen muss. Eine solche Technik ist bei der genannten Stegdoppelplatte nicht möglich, weil diese in diesem Bereich unterbrochen werden müsste, was zu einer fehlenden Beheizung in diesem Bereich führt.

Der Erfindung liegt deshalb die Aufgabe zugrunde, einen Warmluft-Thermoboden für Wohnmobile und Wohnanhänger und andere Freizeitfahrzeuge (insbesondere auch Wasser- und Luftfahrzeuge) so weiterzubilden, dass eine günstige Wärmeverteilung über den Fußboden, bevorzugt in den begangenen Bereichen des Fußbodens, erfolgt, dass die Wärmeverteilung gleichmäßig und mit hohem Wirkungsgrad erfolgt und dass auch auf die fahrzeugseitigen Einbauten im Fahrzeugboden Rücksicht genommen werden kann.

Zur Lösung der gestellten Aufgabe ist die Erfindung durch die technische Lehre des Anspruches 1 gekennzeichnet.

Wesentliches Merkmal der Erfindung ist, dass im Fahrzeugboden selbst warmluftdurchströmte Fräskanäle angeordnet sind, welche im Bereich von hochisolierenden Isolierplatten eingebracht sind, die auf dem tragenden, unteren Fahrzeugboden aufgelegt sind, und dass oberhalb der Fräskanäle, im Wärmekontakt mit der strömenden Warmluft eine wärmeleitende Metallplatte angeordnet ist, welche der gleichmäßigen Verteilung der Wärme unter dem Fußbodenbelag dient.

Mit der gegebenen technischen Lehre ergibt sich der Vorteil, dass die Warmluft auf einfache Weise im fahrzeugseitigen Fahrzeugboden selbst integriert ist, wenn man davon ausgeht, dass der Fahrzeugboden als unterste Schicht einen Unterbodenschutz aufweist und sich darüber unmittelbar eine erste, bodenseitige, lastaufnehmende Deckschicht anschließt. Wichtig ist nun, dass unmittelbar auf dieser bodenseitigen Deckschicht, die beispielsweise eine Dicke von 2 bis 6 mm hat, - und auf der schwere, fahrzeugseitige Einbauteile abgestützt sind - Isolierplatten angeordnet sind, welche z. B. aus einem Isolierschaummaterial oder einem anderen hochwärmedämmenden Material (z.B. Platten aus gepresster Steinwolle, Mineralwolle, Holzwolle, Papier, Pappe), bestehen. In diese dicht aneinander anliegenden Isolierplatten sind nun erfindungsgemäß die Fräskanäle eingebracht, welche die warmluftführenden Kanäle ausbilden.

Damit ergibt sich der wesentliche Vorteil, dass durch die Anlage von gefrästen Warmluftkanälen eine freie Leitungsführung möglich ist.

In den Bereichen des Fußbodens, wo ein besonders hoher Wärmebedarf besteht (das sind die begangenen Bereiche auf dem Fußboden), wird eine relativ hohe Dichte der Fräskanäle - also ein enger Abstand der nebeneinander liegenden Kanäle - gewählt, während die Fräskanäle in anderen Bereichen einen größeren Abstand aufweisen. Hierbei wird ein stets gleichbleibender Kanalquerschnitt vorausgesetzt. In einer anderen Ausführung kann jedoch der gegenseitige Abstand der Fräskanäle gleich sein und der Querschnitt der Fräskanäle kann verändert werden.

Erfindungsgemäß sind nun die Fräskanäle in verschiedenartigen Bögen in den Isolierplatten geführt, mit dem Ziel, Einlagen und Aussparungen im Fahrzeugboden zu umfahren und dennoch den unmittelbaren Nachbarbereich dieser Einlagen und Aussparungen beheizen zu können, was beim Stand der Technik nicht der Fall ist.

Deshalb ist eine freie Leitungsführung für die Verwirklichung der erfindungsgemäßen Idee wichtig.

Die Warmluft strömt durch Kanäle und erwärmt den Boden. Zur Vermeidung unnötiger Wärmeverluste sind die Kanäle im oberen Teil des Bodens, direkt unter einer oberen Deckschicht und einem Fußbodenbelag vorgesehen. Es handelt sich somit um dieselbe Positionierung wie bei den Heizrohren einer wassergeführten Heizung. Zur gleichmäßigen Wärmeverteilung wird ein Blech unter der oberen Deckschicht eingelegt, wie beim wassergeführten System. Über den Kanälen befinden sich beispielsweise somit ein Aluminiumblech, 3 mm Sperrholz sowie der PVC-Belag, darunter ca. 16 mm Styropor-Isolierung und eine 3 mm Deckschicht.

### Vorteile:

- günstige Temperierung von Reisemobil- und Caravan-Böden
- bestehende Serien-Gasheizung wird genutzt
- einfache Installation, kein Wasser o. ä. notwendig
- autarke Bodenheizung, kein Stromanschluss ( 230 V) erforderlich

Die Kanäle (Fräskanäle im Bereich Rahmen/Dämmung) können sowohl längs als auch quer verlaufen. Ausschlaggebend ist der jeweilige Grundriss des Fahrzeuges.

Die Kanäle werden von Warmluft (einer normalen Camping-Heizung) durchströmt. Die Kanäle werden mittels eines Fräsers in das Material der Isolierplatten eingebracht, wodurch sich ein im Querschnitt etwa C-förmiges Profil des Kanals ergibt.

Die obere und gegebenenfalls auch die untere Deckschicht können aus verschiedenartigen Materialien bestehen. Hierbei kann das Material für die obere Deckschicht von dem Material für die untere Deckschicht abweichen. Es können jedoch auch gleiche Materialien für die obere und die untere Deckschicht gewählt werden.

Für beide Alternativen der Materialpaarung (untere und obere Deckschicht) werden folgende Materialien bevorzugt:
1. Holzwerkstoff (z.B. Sperrholz)
2. Faserverbundwerkstoff (z.B. GFK, CFK)
3. Kunststoff
4. Blech
5. Kunstoff-Laminat (z.B. HPL)
6. Verbundmaterialien aus einem oder mehreren der vorstehend genannten Materialien 1 bis 5.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf einen Fahrzeugboden in einem Wohnmobil in einer ersten Ausführungsform
- Figur 2:: Schnitt durch Figur 1 in vergrößerter Darstellung
- Figur 3:: eine Detailansicht der Figur 2 mit Darstellung weiterer Einzelheiten
- Figur 4:: die Draufsicht auf die Figur 3 in Höhe eines Schnittes durch die Fräskanäle
- Figur 5:: eine Draufsicht auf den Grundriss eines Wohnmobils ohne Fahrerhaus und Heckgarage
- Figur 6:: die thermografische Draufsicht auf die Heizwirkung der Warmluftkanäle, wenn eine Blechplatte nicht verwendet wird.
- Figur 7:: die gleiche Darstellung wie in Figur 6 mit Verwendung einer wärmeverteilenden Blechplatte
- Figur 8:: Darstellung der Wärmeverteilung an der Zuluftseite des Fahrzeugbodens mit Darstellung des zuluftseitigen Verteilerkanals

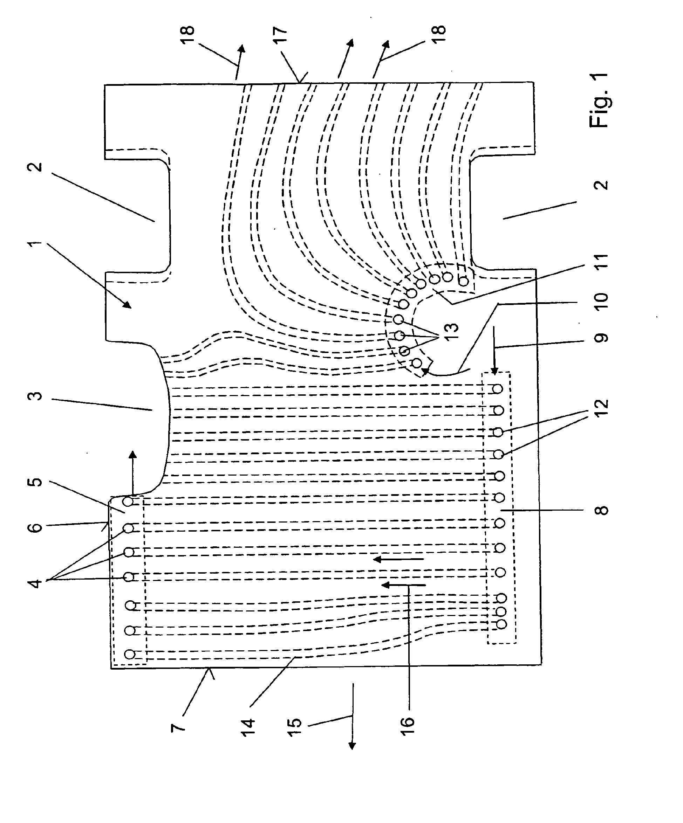

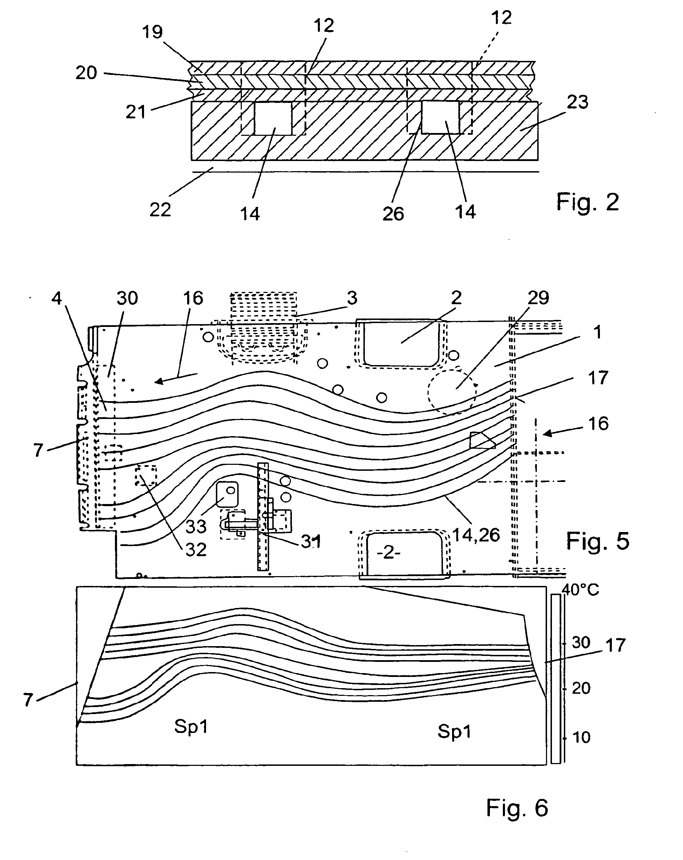

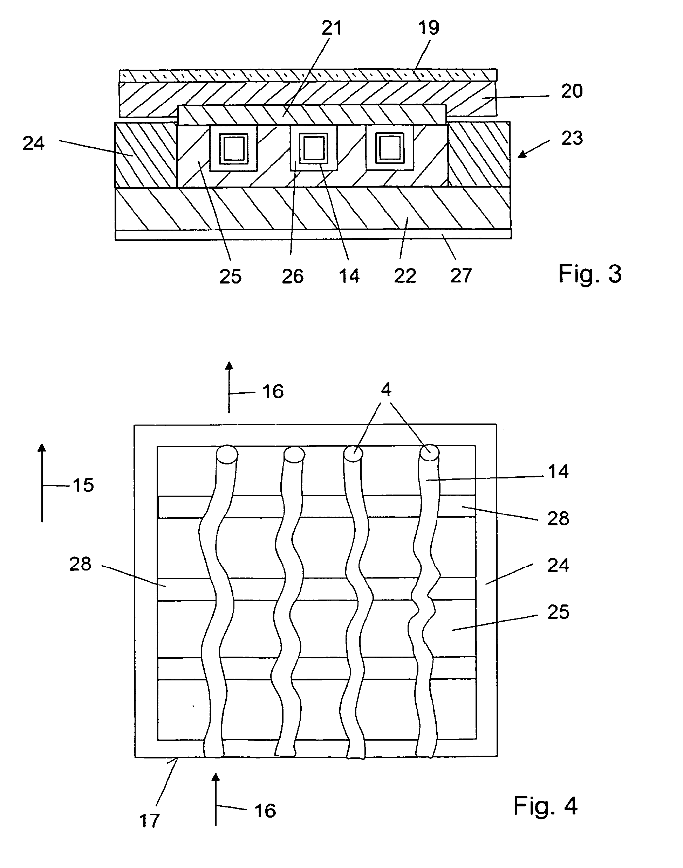

In Figur 1 ist allgemein ein Fahrzeugboden 1 dargestellt, der in den Figuren 2 und 3 im Schnitt dargestellt ist.

Der Fahrzeugboden 1 weist in der Draufsicht zwei einander gegenüberliegende Radläufe 2 auf, in welche die nicht näher dargestellten Räder des Fahrzeuges eine Achse eingreifen und ferner eine Ausnehmung für den Eingriff eines Eintrittschachtes 3, in den die hier nicht dargestellte Eintrittstreppe eingreift.

Im gezeigten Ausführungsbeispiel sind insgesamt zwei unterschiedliche Heizkreisläufe dargestellt, wobei der linke Heizkreislauf von einem sich in Längsrichtung des Fahrzeuges erstreckenden Verteilerkanal 8 ausgeht, der in der Nähe der Frontseite 7 des Fahrzeuges angeordnet ist. In Pfeilrichtung 15 schließt sich hierbei das Fahrerhaus an, während auf der gegenüberliegenden Seite bei 17 der Garagenbereich angeschlossen ist.

Über den in Längsrichtung verlaufenden Verteilerkanal 8 verlaufen eine Reihe von Zuluftbohrungen 12, welche einen größeren Querschnitt aufweisen, als vergleichsweise die daran anschließenden Warmluftkanäle 14. Dies ergibt sich insbesondere aus Figur 2, wo erkennbar ist, dass sich die Zuluftbohrungen 12, in welche die Heizungsluft einströmt, auf einen kleineren Querschnitt der Warmluftkanäle 14 (Fräskanäle) vermindern.

Aus Figur 1 ist erkennbar, dass die von der Heizung 29 (siehe Figur 5) aufbereitete Warmluft in Pfeilrichtung 9 in den Verteilerkanal 8 stirnseitig einströmt und sich dort gleichmäßig verteilt, um so in die einzelnen Warmluftkanäle 14 einströmen zu können. Dort strömt die Warmluft in Pfeilrichtung 16 getrennt in jedem einzelnen Warmluftkanal 14 quer zur Fahrrichtung des Fahrzeuges und strömt an gegenüberliegenden Abluftbohrungen 4 aus, die bevorzugt im Bereich eines Schrankes oder eines anderen Abluftverteilers angeordnet sind.

Außerhalb der Abluftbohrungen 4 schließt sich dann die nicht näher dargestellte Seitenwand 6 des Fahrzeuges an.

Die Ausströmung im Bereich der Abluftbohrungen 4 kann deshalb beispielsweise hinter einem Schrank 5 vor der Seitenwand des Fahrzeuges stattfinden.

In gleicher Weise ist ein weiterer Warmluftbereich dargestellt, der im Wesentlichen aus dem Verteilerkanal 11 besteht, der gebogen ausgebildet ist, in den die Warmluft in Pfeilrichtung 10 einströmt und dort in zugeordnete Zuluftbohrungen 13 verteilt wird und dort ebenfalls über eine Vielzahl von Warmluftkanälen 14 verläuft, welche die Luft in Pfeilrichtung 18 in den nicht näher dargestellten Garagenbereich 17 einströmen lassen.

Es wird bevorzugt, wenn zwei solche Verteilerkanäle 8, 11 vorhanden sind, obwohl die Erfindung nicht darauf beschränkt ist. Es kann auch vorgesehen werden, einen einzigen Verteilerkanal auszubilden, der dann beispielsweise die beiden Verteilerkanäle 8, 11 luftschlüssig miteinander verbindet.

In Figur 2 sind weitere Einzelheiten des Aufbaus dargestellt, wo erkennbar ist, dass ausgehend von einer unteren Deckschicht 22, die bevorzugt 3 mm Dicke aufweist, ein Holzrahmen mit einer Dämmung 23 aufgebaut ist, der in Figur 3 näher dargestellt ist.

Wichtig ist nun, dass in den Bereich der Dämmung (siehe Platte 25 in Figur 3) die besagten halboffenen Warmluftkanäle 14 eingefräst sind.

Die durch Fräsung in der Isolierplatte 25 hergestellten Wärmluftkanäle 14 schließen unmittelbar luftberührend und wärmeübertragend an der darüber liegenden Blechplatte 21 an.

Die Blechplatte 21 bildet also den oberen Abschluss der nach oben offenen Warmluftkanäle 14.

Die Blechplatte 21 besteht bevorzugt aus einem Aluminiumblech mit einer Dicke von z. B. 0,3 bis 0,8 mm, wobei statt eines Aluminiumbleches auch ein anderes Blech mit guter Wärmeleitfähigkeit verwendet werden kann.

Wichtig ist nur die gute Wärmeleitfähigkeit des Materials.

Oberhalb der Blechplatte 21 ist die obere Deckschicht 20 mit einer Dicke von bevorzugt im Bereich von 3 mm vorgesehen und darüber ist ein herkömmlicher Bodenbelag 19 angeordnet, der beispielsweise aus einem PVC-Belag mit einer Dicke von 2 bis 3 mm besteht.

In Figur 3 ist gezeigt, dass der Holzrahmen und die Dämmung 23 auf die untere Deckschicht 22 aufgelegte seitliche Holzleisten 24 aufweisen, zwischen denen die Isolierplatte 25 eingelegt ist. In diese Isolierplatte 25 sind die vorher genannten gebogen geführten Warmluftkanäle 14 eingefräst und werden luftschlüssig nach oben direkt von der dort aufgelegten Blechplatte 21 abgedeckt.

Die Blechplatte 21 ist durch die vorher erwähnte obere Deckschicht 20 seitlich übergriffen, um einen seitlichen Wärmeverlust zu vermeiden.

Die Figur 4 zeigt, dass im Bereich des Holzrahmens und der Dämmung 23 noch in Fahrrichtung quer verlaufende Querholzleisten 28 eingelegt sind, um dem gesamten Boden eine hohe Lastaufnahme mit entsprechender Quer- und Längsstabilität zu verleihen.

In Figur 3 ist nochmals ein solcher Fräskanal 26 dargestellt, der unmittelbar als Warmluftkanal 14 für die Führung der Warmluft dient, die beispielsweise nach Figur 4 - diese ist das zweite Ausführungsbeispiel - in Längsrichtung des Fahrzeuges (in Pfeilrichtung 16) einströmt und im Bereich des Fahrerhauses bei Pfeilrichtung 15 wieder ausströmt.

Die Figur 5 zeigt die tatsächliche Ausführung dieses Ausführungsbeispieles. Auf dem Fahrzeugboden 1 ist eine Heizung 29 aufgebaut, die über einen nicht näher dargestellten Anschlussverteiler in Pfeilrichtung 16 am Garagenbereich 17 die Warmluft in die Warmluftkanäle 14 einspeist. Die Warmluftkanäle 14 sind durch die oben genannten halboffenen Kanäle, insbesondere in der Ausbildung als Fräskanäle 26, gebildet.

Wichtig ist nun, dass der bogenförmige Verlauf der Warmluftkanäle 14 dazu dient, bestimmte Bereiche im Fußboden zu umfahren, die ein Hindernis im Fußbodenaufbau darstellen. Hier ist erkennbar, dass beispielsweise auf der linken Seite ein Gurtbock 31 für die Sitzgruppe angeordnet ist, die unmittelbar fest auf dem Fahrzeugboden 1 verankert werden muss. Eine Unterfahrung dieses Gurtbockes 31 mit den Heizkanälen ist aus Stabilitätsgründen nicht erwünscht.

Gleiches gilt für den Tischfuß 32, der aus Festigkeitsgründen unmittelbar mit dem Fahrzeugboden 1 verbunden werden muss und der deshalb ebenfalls nicht mit den Warmluftkanälen 14 unterfahren werden darf.

Wichtig ist jedoch, dass der bogenförmige Verlauf der Warmluftkanäle so gewählt ist, dass sie in unmittelbarer Nähe des Gurtbockes 31 und des Tischfußes 32 verlaufen und von beiden Seiten her den Tischfuß 32 umgeben, um so eine besonders komfortable Heizung des Fußbodenbereichs der Sitzecke zu ermöglichen. Daher wird der Bodenbereich in unmittelbarer Nähe des Tischfußes beheizt, was bei gerade verlaufenden Warmluftkanälen nach dem Stand der Technik nicht möglich wäre.

Dies gilt auch für die Aussparung, die für einen Frischwassertank 33 vorgesehen ist und die gemäß der Darstellung in Figur 5 ebenfalls von den Warmluftkanälen 14 umströmt wird.

Statt eines Abluftverteilers, wie er in Figur 1 dargestellt ist, um die Abluftbohrungen 4 zusammenzufassen, kann auch gemäß Figur 5 die gesamte Abluftöffnung von einem Abdeckblech 30 in der Nähe des Fahrerhauses (Frontseite 7) abgedeckt sein und dort sind Schlitze angeordnet, um so die Warmluft durch die Schlitze in das Fahrhaus fußbodenseitig eintreten zu lassen.

Anhand der Figur 2 und 3 sei noch darauf hingewiesen, dass der untere Bereich der unteren Deckschicht 22 mit einem Unterbodenschutz 27 beschichtet sein kann.

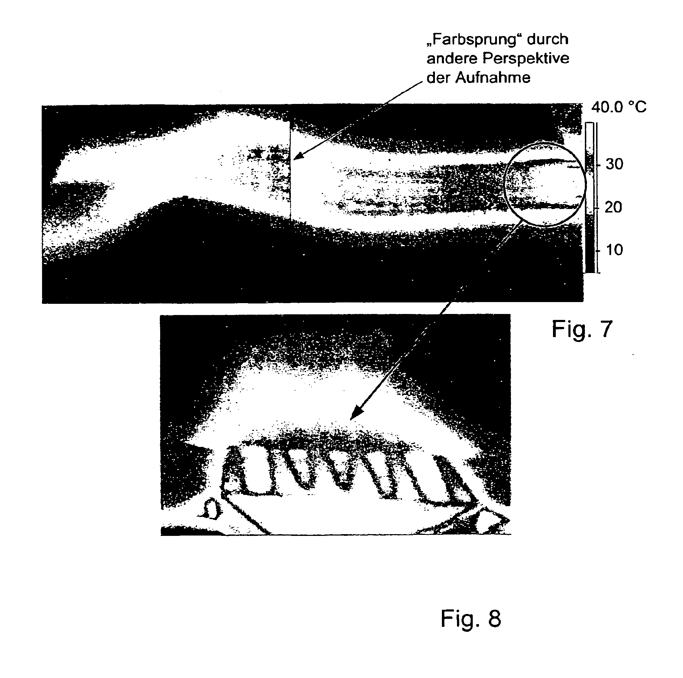

Aus der Figur 7 ergibt sich nun durch Vergleich der Figur 6 der Unterschied der Wirkung bei der Verwendung einer erfindungsgemäßen Blechplatte 21.

Während die Figur 6 die Wärmeverteilung in einer thermografischen Darstellung ohne die Blechplatte 21 zeigt, zeigt die Figur 7, dass die verwendete Blechplatte zu einer gleichmäßigen Verteilung des Wärmestromes der einzelnen Fräskanäle 26 im Fußbodenbereich führt und dass deshalb ein besonders günstiger Wärmeverlauf mit einer optimalen Beheizung des Fußbodens des Wohnmobils oder des Wohnwagens erfolgt.

Die Figur 8 zeigt in vergrößerter Darstellung noch die Einlaufseite der Warmluft im Garagenbereich 17 gemäß der Figur 5, wo erkennbar ist, dass die zunächst hoch-temperiert auf die Einströmbohrungen konzentrierte Wärme in Längsrichtung der Fräskanäle sehr schnell verteilt wird und dann einen gleichmäßigen Wärmeverlauf über die gesamte Länge der Fräskanäle 26 ergibt.

Die Erfindung ist nicht auf die Warmluftführung in Fräskanälen einer Dämmplatte beschränkt. In einer anderen Ausführungsform kann vorgesehen sein, dass diese Ausfräsungen in der Dämmplatte mit einem dünnen Folienschlauch ausgefüllt sind, wobei dieser Folienschlauch im Querschnitt entweder geschlossen oder halboffen ist, um eine Anströmung der Warmluft an die Unterseite der Blechplatte zu ermöglichen.

In einer dritten Ausgestaltung kann es vorgesehen sein, dass die Fräskanäle durch dünnwandige und/oder glattwandige Rohre ausgekleidet sind, wobei wiederum vorgesehen ist, dass die Rohre im Querschnitt geschlossen oder teilweise offen sind, um eine direkte Anströmung der Warmluft an die Unterseite der Blechplatte zu ermöglichen.

Solche dünnwandigen Rohre können entweder dünnwandige Metallrohre (bevorzugt Aluminium oder aus einem Folienmaterial bestehende Rohre) sein, sie können jedoch auch dünnwandige Kunststoffrohre sein oder auch aus der Kombination der genannten Materialien bestehen.

Zur Erhöhung der Luftgeschwindigkeit kann der Einsatz eines zusätzlichen Lüfters sowohl zuluft- als auch abluftseitig erfolgen. Dies stellt ebenfalls einen Bestandteil der Erfindung dar.

### Zeichnungslegende

- 1: Fahrzeugboden
- 2: Radlauf
- 3: Eintrittsschacht
- 4: Abluftbohrung
- 5: Schrank
- 6: Wand
- 7: Frontseite (Fahrerhaus)
- 8: Verteilerkanal (Längs)
- 9: Zuluft-Eintritt
- 10: Zuluft-Eintritt
- 11: Verteilerkanal (gebogen)
- 12: Zuluftbohrung
- 13: Zuluftbohrung
- 14: Warmluftkanal
- 15: Pfeilrichtung (Fahrerhaus)
- 16: Pfeilrichtung
- 17: Garagenbereich
- 18: Pfeilrichtung
- 19: Bodenbelag
- 20: Obere Deckschicht (z.B. Sperrholzplatte o. dgl.)
- 21: Blechplatte
- 22: Untere Deckschicht (z.B. Sperrholzplatte o. dgl.)
- 23: Holzrahmen und Dämmung
- 24: Seitliche Holzleiste
- 25: Isolierplatte
- 26: Fräskanal
- 27: Unterbodenschutz
- 28: Querholzleiste
- 29: Heizung
- 30: Abdeckblech
- 31: Gurtbock (Sitzgruppe)
- 32: Tischfuß
- 33: Frischwassertank

## Patentansprüche

1. Wohnmobil oder Wohnwagen mit Warmluft-Thermoboden aufweisend eine untere, lastaufnehmende Deckschicht (22), die unterseitig gegebenenfalls mit einem Unterbodenschutz (27) beschichtet ist, auf der eine Schicht aus dicht miteinander verbundenen Isolierplatten (25) aufgelegt ist, die zur Führung eines Warmluftstromes bestimmt sind, wobei die Isolierplatten unter Bildung von warmluftdurchströmten Hohlräumen nach oben hin durch eine obere Deckschicht (20) abgedeckt sind, wobei die warmluftdurchströmten Hohlräume durch in den Isolierplatten (25) eingebrachte Kanäle (26) gebildet sind und wobei die Kanäle als Fräskanäle (26) ausgebildet sind und als nach oben offene, luftführende Kanäle in den Isolierplatten (25) angeordnet sind, **dadurch gekennzeichnet, dass** oberhalb der Fräskanäle (26), im Wärmekontakt mit der strömenden Warmluft eine wärmeleitende Metallplatte (21) angeordnet ist, welche der Vergleichmässigung der Wärmeverteilung über dem Fussboden dient und wobei die Fräskanäle (26) in verschiedenartigen Bögen in den Isolierplatten (25) geführt sind, derart Einlagen und Aussparungen im Fahrzeugboden umfahren sind und dennoch des unmittelbaren Nachbarbereich dieser Einlagen und Aussparungen beheizbar ist.

2. Wohnmobil oder Wohnwagen nach Anspruch 1, **dadurch gekennzeichnet, dass** in den Bereichen des Fussbodens, wo ein besonders hoher Wärmebedarf besteht, eine hohe Dichte der Fräskanäle (26) vorgesehen ist und demzufolge ein enger Abstand der nebeneinander liegenden Kanäle gewählt ist, während die Fräskanäle (26) in anderen Bereichen einen grösseren Abstand aufweisen.

3. Wohnmobil oder Wohnwagen nach einem der Ansprüche 1 oder 2, **dadurch gekennzeichnet, dass** oberhalb der oberen Deckschicht (20) ein Bodenbelag (19) angeordnet sind.

4. Wohnmobil oder Wohnwagen nach einem der Ansprüche 1, 2 oder 3 **dadurch gekennzeichnet, dass** zwei unterschiedliche Heizkreisläufe vorhanden sind, von denen der eine Heizkreislauf von einem sich in Längsrichtung des Fahrzeuges erstreckenden Verteilerkanal (8) ausgeht, der in der Nähe der Frontseite (7) des Fahrzeuges auf einer der Längsseiten angeordnet ist, und die davon ausgehenden Fräskanäle (26) quer zur Fahrzeuglängsachse verlaufen.

5. Wohnmobil oder Wohnwagen nach Anspruch 4, **dadurch gekennzeichnet, dass** der zweite Heizkreislauf etwa im Mittenbereich des Fahrzeuges an einer Längsseite des Fahrzeuges einen Verteilerkanal (11) aufweist, von dem ausgehend sich die Fräskanäle (26) etwa parallel oder bogenförmig zur Längsachse des Fahrzeuges in Richtung auf den hinteren Teil des Fussbodens (17) erstrecken.

6. Wohnmobil oder Wohnwagen nach einem der Ansprüche 1 bis 5, **dadurch gekennzeichnet, dass** der Strömungsauslass der Fräskanäle (26) verdeckt im Bereich hinter einem Schrank (5) oder einem anderen Einbaumöbel mündet.

7. Wohnmobil oder Wohnwagen nach einem der Ansprüche 1 bis 6, **dadurch gekennzeichnet, dass** ausgehend von der unteren Deckschicht (22) ein Holzrahmen (24) mit Querholzleisten (28) befestigt ist, welche Gefache bilden, die mit den Isolierplatten (25) ausgelegt sind, in deren Bereich die Fräskanäle (26) eingearbeitet sind.

8. Wohnmobil oder Wohnwagen nach einem der Ansprüche 1 bis 7, **dadurch gekennzeichnet, dass** die durch Fräsung in der Isolierplatte (25) hergestellten Wärmluftkanäle (14) unmittelbar luftführend an die darüber liegenden Metallplatte (21) anschliessen.

9. Wohnmobil oder Wohnwagen nach einem der Ansprüche 1 bis 8, **dadurch gekennzeichnet, dass** die luftberührten Wände der Fräskanäle aus dem Material der Isolierplatten gebildet sind.

10. Wohnmobil oder Wohnwagen nach einem der Ansprüche 1 bis 7, **dadurch gekennzeichnet, dass** die luftberührten Wände der Fräskanäle eine Auskleidung aufweisen.

11. Wohnmobil oder Wohnwagen nach Anspruch 10, **dadurch gekennzeichnet, dass** die Auskleidung als Folie ausgebildet ist.

12. Wohnmobil oder Wohnwagen nach Anspruch 10 oder 11, **dadurch gekennzeichnet, dass** die Auskleidung als halboffener oder geschlossener Schlauch ausgebildet ist.

13. Wohnmobil oder Wohnwagen nach Anspruch 10, 11, oder 12 **dadurch gekennzeichnet, dass** die Auskleidung als halboffenes oder geschlossenes glattes oder verripptes Rohr ausgebildet ist.

## Claims

1. Camper or caravan with a thermal floor heated by air, having a lower, load-bearing cover layer (22), which is optionally coated underneath with an underbody protection (27), on which a layer of insulating plates (25) closely connected to one another is laid, said insulating plates being intended to guide a flow of hot air, the insulating plates being covered toward the top by an upper covering layer (20) while forming cavities through which hot air flows, the cavities through which hot air flows being formed by channels (26) placed into the insulating plates (25) and the channels being formed as milled channels (26) and being arranged in the insulating plates (25) as air-guiding channels open at the top, **characterised in that** arranged above the milled channels (26) in thermal contact with the flowing hot air is a heat-conducting metal plate (21), which is used to make the heat distribution uniform over the floor and wherein the milled channels (26) are guided in various types of curves in the insulating plates (25) in such a way that inserts and recesses in the vehicle floor are bypassed and nevertheless the direct vicinity of these inserts and recesses can be heated.

2. Camper or caravan according to claim 1, **characterised in that** a high density of milled channels (26) is provided in the regions of the floor where there is a particularly high heat requirement and consequently a narrow spacing of the channels located next to one another is selected, while the milled channels (26) in other regions have a larger spacing.

3. Camper or caravan according to either of claims 1 or 2, **characterised in that** a floor covering (19) is arranged above the upper covering layer (20).

4. Camper or caravan according to any one of claims 1, 2 or 3, **characterised in that** two different heating circuits are provided, of which one heating circuit comes from a distributor channel (8), which extends in the longitudinal direction of the vehicle and is arranged close to the front side (7) of the vehicle on one of the longitudinal sides, and the milled channels (26) coming therefrom run transverse to the vehicle longitudinal axis.

5. Camper or caravan according to claim 4, **characterised in that** the second heating circuit has, approximately in the centre region of the vehicle on a longitudinal side of the vehicle, a distributor channel (11), proceeding from which the milled channels (26) extend approximately parallel or in a curved manner with respect to the longitudinal axis of the vehicle in the direction of the rear part of the floor (17).

6. Camper or caravan according to any one of claims 1 to 5, **characterised in that** the flow outlet of the milled channels (26) opens in a concealed manner in the region behind a cupboard (5) or another piece of built-in furniture.

7. Camper or caravan according to any one of claims 1 to 6, **characterised in that**, proceeding from the lower covering layer (22), a wooden frame (24) with transverse wooden strips (28) is fastened, which form partitions, which are covered with the insulating plates (25), in the region of which the milled channels (26) are incorporated.

8. Camper or caravan according to any one of claims 1 to 7, **characterised in that** the hot air channels (14) produced by milling in the insulating plate (25), in an air-guiding manner directly adjoin the metal plate (21) located thereabove.

9. Camper or caravan according to any one of claims 1 to 8, **characterised in that** the walls, which are touched by air, of the milled channels are formed from the material of the insulating plates.

10. Camper or caravan according to any one of claims 1 to 7, **characterised in that** the walls, which are touched by air, of the milled channels have a lining.

11. Camper or caravan according to claim 10, **characterised in that** the lining is configured as foil.

12. Camper or caravan according to claim 10 or 11, **characterised in that** the lining is configured as a half-open or closed flexible tube.

13. Camper or caravan according to claim 10, 11 or 12, **characterised in that** the lining is configured as a half-open or closed smooth or ribbed pipe.

## Revendications

1. Camping-car ou caravane comprenant un plancher thermique chauffé par de l'air comprenant une couche de recouvrement inférieure (22) soutenant la charge qui est, le cas échéant, recouverte sur sa face inférieure d'un élément de protection du bas de caisse (27) sur laquelle est disposée une couche de plaques isolantes (25) reliées entre elles de façon jointive qui sont destinées au transfert d'un flux d'air chaud, ces plaques isolantes étant recouvertes par une couche de recouvrement supérieure (20) en formant vers le haut, des cavités traversées par de l'air chaud, ces cavités traversées par de l'air chaud, étant formées par des canaux (26) logés dans les plaques isolantes (25), ces canaux étant réalisés sous la forme de canaux fraisés, et disposés dans les plaques isolantes (25), sous la forme de canaux de transfert d'air ouverts vers le haut,
**caractérisé en ce qu'**
au-dessus des canaux fraisés (26) et en contact thermique avec l'air chaud en circulation est disposée une plaque métallique (21) conductrice de la chaleur qui sert à uniformiser la répartition de la chaleur sur le plancher, et les canaux fraisés (26) sont dirigés dans les plaques isolantes (25) avec des courbures de natures différentes, de sorte que des éléments rapportés et des évidements présents dans le plancher du véhicule soient contournés et qu'ainsi les zones situées à proximité immédiate de ces éléments rapportés et de ces évidements puissent être chauffées.

2. Camping-car ou caravane conforme à la revendication 1,
**caractérisé en ce que**
dans les zones du plancher où les besoins en chaleur sont particulièrement élevée, il est prévu une densité élevée de canaux fraisés (26), et par suite, une distance plus faible entre les canaux voisins, est choisie tandis que dans les autres zones, les canaux fraisés (26) sont situés à une distance plus importante.

3. Camping-car ou caravane conforme à l'une des revendications 1 et 2,
**caractérisé en ce qu'**
au-dessus de la couche de recouvrement supérieure (20) est disposée une garniture de plancher (19).

4. Camping-car ou caravane conforme à l'une des revendications 1, 2 ou 3,
**caractérisé en ce qu'**
il est prévu deux circuits de chauffage différents, dont l'un part d'un canal de distribution (8) s'étendant dans la direction longitudinale du véhicule, et situé à proximité de la face frontale (7) du véhicule, sur l'un des côtés longitudinaux, de celui-ci, les canaux fraisés (26) s'étendant à partir de ce canal de distribution, s'étendant transversalement à l'axe longitudinal du véhicule.

5. Camping-car ou caravane conforme à la revendication 4,
**caractérisé en ce que**
le second circuit de chauffage comporte, essentiellement, dans la zone médiane du véhicule, sur un côté longitudinal de celui-ci, un canal de distribution (11) à partir duquel s'étendent les canaux fraisés (26) essentiellement parallèlement ou en forme d'arcs par rapport à l'axe longitudinal du véhicule en direction de la partie arrière du plancher (17).

6. Camping-car ou caravane conforme à l'une des revendications 1 à 5,
**caractérisé en ce que**
la sortie d'écoulement des canaux fraisés (26) est dissimulée et débouche dans une zone située à l'arrière d'une armoire (5) ou d'un autre élément de mobilier.

7. Camping-car ou caravane conforme à l'une des revendications 2 à 6,
**caractérisé en ce que**
à partir de la couche de revêtement inférieure (22), un cadre en bois (24) est fixé avec des traverses en bois (28) formant des cases qui sont garnies des plaques isolantes (25) au niveau desquelles sont réalisés les canaux fraisés (26).

8. Camping-car ou caravane conforme à l'une des revendications 1 à 7,
**caractérisé en ce que**
les canaux d'air chaud (14) réalisés par fraisage dans les plaques isolantes (25), se raccordent directement à la plaque métallique (21) située au-dessus en guidant l'air.

9. Camping-car ou caravane conforme à l'une des revendications 1 à 8,
**caractérisé en ce que**
les parois des canaux fraisés en contact avec l'air, sont réalisées dans le matériau des plaques isolantes.

10. Camping-car ou caravane conforme à l'une des revendications 1 à 7,
**caractérisé en ce que**
les parois des canaux fraisés en contact avec l'air, comportent un revêtement.

11. Camping-car ou caravane conforme à la revendication 10,
**caractérisé en ce que**
le revêtement est réalisé sous la forme d'une feuille.

12. Camping-car ou caravane conforme à la revendication 10 ou 11,
**caractérisé en ce que**
le revêtement est réalisé sous la forme d'un tuyau flexible fermé ou semi-ouvert.

13. Camping-car ou caravane conforme à la revendication 10, 11 ou 12,
**caractérisé en ce que**
le revêtement est réalisé sous la forme d'un tube lisse ou nervuré semi-ouvert ou fermé.
